Europäisches Patentamt

European Patent Office

Office européen des brevets

(11) Publication number: **0 332 703**
**A1**

## EUROPEAN PATENT APPLICATION
### published in accordance with Art. 158(3) EPC

(21) Application number: 88906114.9

(22) Date of filing: 20.07.88

(86) International application number:
PCT/JP88/00730

(87) International publication number:
WO 89/01197 (09.02.89 89/04)

(51) Int. Cl.⁴: **G05B 19/403 , G05B 19/405**

(30) Priority: 29.07.87 JP 189617/87

(43) Date of publication of application:
20.09.89 Bulletin 89/38

(84) Designated Contracting States:
DE FR GB IT

(71) Applicant: **FANUC LTD**
**3580, Shibokusa Aza-Komanba Oshino-mura**
**Minamitsuru-gun Yamanashi 401-05(JP)**

(72) Inventor: **MATSUMURA, Teruyuki 38-8,**
**Matsugatani**
**Hachioji-shi**
**Tokyo 192-03(JP)**
Inventor: **NAGASHIMA, Noritake 4193-20,**
. **Shimotsuruma**
**Yamato-shi**
**Kanagawa 242(JP)**

(74) Representative: **Brunner, Michael John et al**
**GILL JENNINGS & EVERY 53-64 Chancery**
**Lane**
**London WC2A 1HN(GB)**

(54) **DATA INPUT SYSTEM.**

(57) A data input system for preparing a machining program for use in an interactive numerical controller. A screen (I) having a plurality of questions is displayed. When a help key (6) is depressed, the explanatory sentence of the question is displayed or the explanatory screen is displayed to explain the diagram. A beginner uses the help key (6) to easily input the data while viewing the explanatory sentence or the explanatory view, and easily prepares the machining program.

Fig. I

# DATA INPUT SYSTEM

### Technical Field

The present invention relates to a data input system for inputting data while referring to a display screen to produce a machining program, and more particularly to a data input system provided with a help key for allowing a programmer whoever he may be skilled or less skilled to easily use the same.

### Background Art

Generally, there are two types of data input system for inputting data while referring to a display screen to produce a machining program.

The first type thereof is referred to as "pictorial input system" in which an explanatory message or a diagram responsive to each of queries is displayed on the same screen on which the query is displayed, and a programmer successively inputs required data while referring to the explanatory message or the diagram.

The second type thereof is referred to as "list input system" in which an explanatory message or a diagram is not displayed but only a plurality of queries are listed on a single screen, and a programmer enters data for each of the queries.

While the "pictorial input system" is easily usable for a beginner because the explanatory message or the diagram is displayed for each of the queries, the same is somewhat complicated for a veteran programmer. On the other hand, the "list input system" puzzles the beginner and further operation cannot be achieved. For an intermediate class programmer, the programming is left half-finished in either of the systems.

### Disclosure of the Invention

An object of the invention is to resolve the foregoing problems and to provide a data input system provided with a help key for allowing a programmer whoever he may be skilled or less skilled to easily use the same.

In order to resolve the foregoing problems, there is provided, according to a first aspect of the invention, a data input system for inputting data while referring to a display screen to produce a machining program, comprising:
a screen having a plurality of queries; and

a help key for causing to selectively display said screen and an explanatory screen displaying an explanatory message or an explanatory diagram responsive to each of said plurality of queries.

According to a second aspect of the invention, there is provided a data input system for inputting data while referring to a display screen to produce a machining program, comprising:
a screen having a plurality of queries: and
a help key for causing to display an explanatory message or an explanatory diagram corresponding to each of said plurality of queries.

According to a third aspect of the invention, there is provided a data input system for inputting data while referring to a display screen to produce a machining program, comprising:
a screen having a plurality of queries:
a help key for causing to display an explanatory message or an explanatory diagram corresponding to each of said plurality of queries; and
an input means capable of inputting said data on a screen on which said explanatory message or said explanatory diagram is displayed.

According to the first aspect of the invention, the explanatory message or the explanatory diagram appears upon depression of the help key. A less skilled programmer can input data with the use of the help key while referring to the explanatory message or the explanatory diagram. A skilled programmer may input data without using the help key. An intermediate class programmer may use the help key as the case demands.

According to the second aspect of the invention, the explanatory message or the explanatory diagram is displayed for each of the queries. The programmer is capable of displaying the explanatory message or the explanatory diagram with the use of the help key, if needed with respect to a specific query.

According to the third aspect of the invention, while displaying the explanatory message or the explanatory diagram on the screen, data input can be taken place on the same screen on which the explanatory message or the explanatory diagram is displayed.

### Brief Description of the Drawings

Fig. 1 is a diagram showing a screen on which queries are displayed according to one embodiment of the present invention;

Fig. 2 is a diagram showing a screen on which possible material numbers are displayed.

Fig. 3 is a diagram showing a screen on which possible pattern formats are displayed;

Fig. 4 is a diagram showing a screen on which possible material configurations are displayed;

Fig. 5 is a flowchart illustrating a relationship between a manipulation and a screen; and

Fig. 6 is a block diagram showing an interactive mode numerical control apparatus for carrying out the present invention.

Best Mode for Carrying Out the Invention

An embodiment of the present invention will be described hereinbelow with reference to the accompanying drawings.

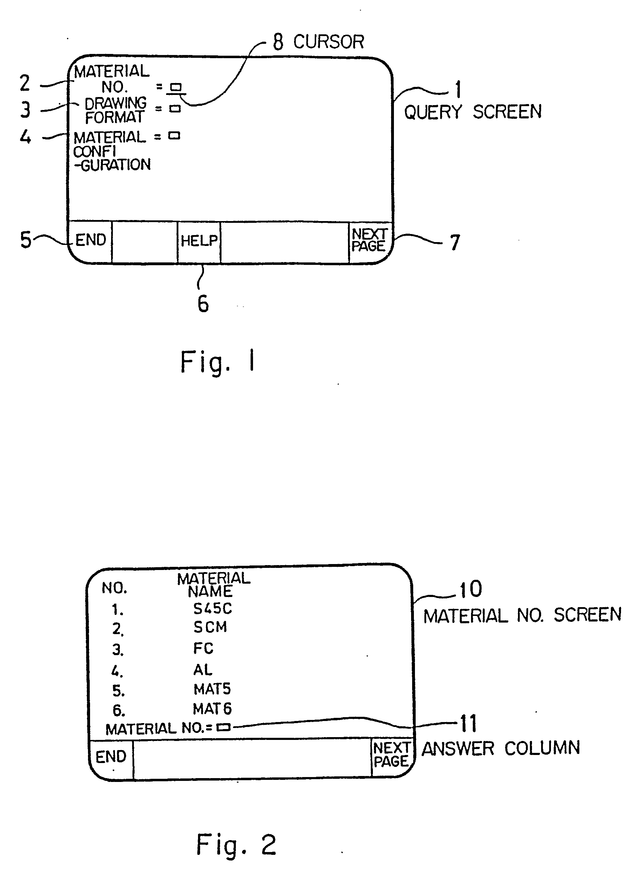

In Fig. 1, there is shown a display screen according to the embodiment of the invention. Hereinafter, description will be made with reference to the case where a machining program is produced while referring to the display screen. To a query screen 1, inputting for display are a material No. 2 of a workpiece to be machined, a drawing format 3, and a material configuration 4.

Denoted by reference numeral 5 is an end key for terminating data input, 6 is a help key for causing to display an explanatry message or an explanatory diagram, and 7 is a page key for causing to display the next page. All of those keys; end key 4, help key 6 and page key 7, are soft keys, whose functions are changed depending upon the screen displayed by a software introduced into the apparatus. Those which a programmer manipulates are the keys provided downwardly of such soft keys. A cursor is denoted by reference numeral 8, which in the figure is in the position of a query of the material No. 2.

For the display screen shown in Fig. 1, a skilled programmer would input relevant data for the material No., the drawing format and the material configuration if he has enough knowledge and memory thereon. A less skilled programmer can display the explanatory message or the explanatory diagram upon depression of the help key 6 with regard to the respective queries. An intermediate class programmer may select either way; the help key 6 may be used only when it is needed.

Description will next be made with respect to the case where the help key 6 is depressed. If the help key 6 is depressed when the cursor 8 is in the position of the material No. 2, there appears a material No. screen as shown in Fig. 2. In Fig. 2, while referring to the material No. screen 10, the programmer may select the relevant material and input its identifying number to an answer column 11. If the data input can be accomplished while referring to the explanatory diagram in such a way, it is convenient for the programmer, since an erroneous input can be obviated.

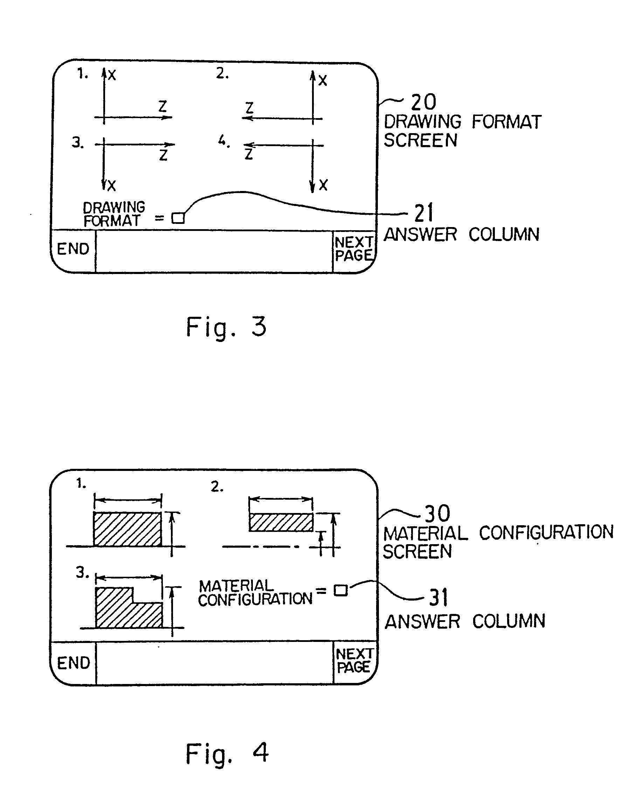

If the help key 6 is depressed when the cursor 8 is in the position of the drawing format 3 on the query screen 1, there appears a drawing format screen. Fig. 3 is the drawing format screen 20 in which four possible drawing formats are indicated. Among these, one to which an actual data is inputted is selected and is inputted to an answer column 21 specified by the cursor 8.

If the help key 6 is depressed when the cursor 8 is in the position of the material configuration 4 on the query screen 1, there appears a material configuration screen. Fig. 4 is the material configuration screen 30 on which three possible material configurations are indicated. Among those, one to which an actual data is inputted is selected and is inputted to an answer column 31.

In this manner, data can be successively inputted by the aid of the explanatory message or the explanatory diagram displayed upon depression of the help key when necessary.

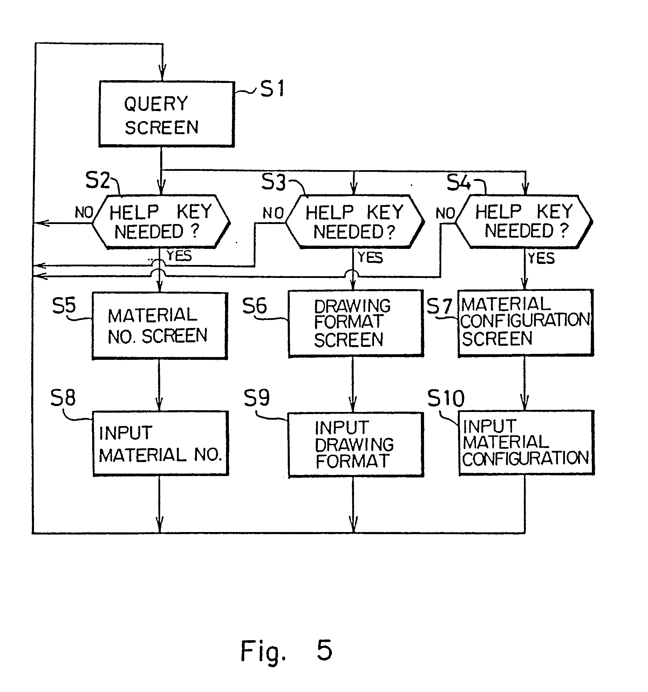

Sequence of operations will be described with reference to a flowchart. Fig. 5 shows such a flowchart illustrating a relationship between the manipulation and the screen. In the figure, numerals following "S" represent step numbers.

[S1] The query screen has initially been displayed. Depending upon the position of the cursor 8 on the query screen 1, the program proceeds to either one of S2, S3, and S4. That is, if the cursor 8 is specifying the material No. 2, the program proceeds to S2; if the same is specifying the drawing format 3, the program proceeds to S3; and if the same is specifying the material configuration 4, the program proceeds to S4.

[S2] Under the condition that the cursor 8 is specifying the material No. 2, it is checked whether or not the help key 6 is needed. If unnecessary, data input is taken place on the query screen 1, whereupon the cursor 8 is moved to the next query. If the data input cannot be achieved, the help key 6 is depressed.

[S5] The material No. screen 10 is displayed.

[S8] Data input is taken place on the material No. screen 10, whereupon the screen is returned to the query screen 1.

[S3] Under the condition that the cursor 8 is specifying the drawing format 3, it is checked whether or not the help key 6 is needed. If unnecessary, data input is taken place on the query screen 1, whereupon the cursor 8 is moved to the next query. If the data input cannot be achieved, the help key 6 is depressed.

[S6] The drawing format screen 20 is displayed.

[S8] Data input is taken place on the drawing format screen 20, whereupon the screen is returned to the query screen.

[S4] Under the condition that the cursor 8 is specifying the material configuration 4, it is checked whether or not the help key 6 is needed. If unnecessary, data input is taken place on the query screen 1. If the data input cannot be achieved, the help key 6 is depressed.

[S7] The material configuration screen 30 is displayed.

[S10] Data input is taken place on the material configuration screen 30, whereupon the screen is returned to the query screen 1.

In this manner, with the depression of the help key 6 as the case demands, the data input can be successively carried out while displaying the explanatory message or the explanatory diagram on the screen. The less skilled programmer may frequently use the help key 6, whereas the skilled programmer may hardly use the same and the intermediate class programmer may use the same at an appropriate timings. As the beginner accumulates experience, the number he uses the help key 6 would decrease and the data input can be carried out at a faster speed. Consequently, the explanatory message or the explanatory diagram can be used depending upon the skillfulness of the data input. As such, a data input system can be provided which is suitable for anyone from a beginner to a veteran.

In the foregoing description, although it has been described the case where there is three queries, the invention is of course not limited thereto but the number of the queries can be increased to the number as is necessary for producing an intended machining program. Further, although it has been described that the explanatory message or the explanatory diagram is displayed on the screen on query basis, it is possible to display a plurality of explanatory messages or explanatory diagrams in combined form responsive to a number of correlated queries so as to extend facility to the programmer. Although the help key has been described as being a soft key, a special purpose hard key may of course be employed.

The above-described data input system can be used in conjunction with an interactive mode numerical control apparatus or an automatic program producing apparatus. A hardware of such interactive mode numerical control apparatus or automatic program producing apparatus is available for the data input system.

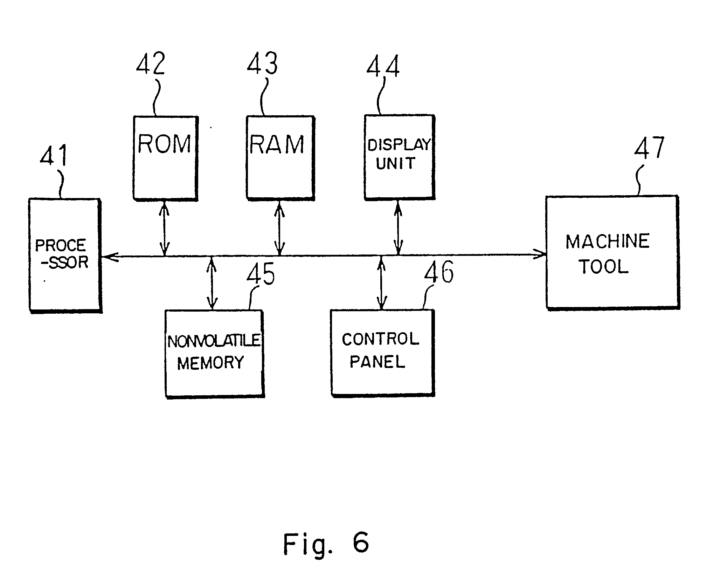

In Fig. 6, there is shown a block diagram showing a hardware of the interactive mode numerical control apparatus which is used for carrying out the invention. In the figure, there is provided a processor 41 and a ROM 42 storing therein the above-mentioned display screens and a system program for controlling the help key. A RAM 43 stores various kinds of data. A display unit 44 displays various screens. A nonvolatile memory 45 stores a machining program, parameters and pitch error correcting amounts or the like. Denoted by numeral 46 is a control panel and 47 is a machine tool.

As described, according to the first aspect of the invention, an explanatory message or an explanatory diagram is displayed when a help key is depressed. Therefore, a less skilled programmer can input data while referring to the explanatory message or the explanatory diagram, and a skilled programmer can input data without using the help key.

According to the second aspect of the invention, an explanatory message or the explanatory diagram is displayed for each of the queries by the depression of the help key. Therefore, the programmer may manipulate the help key only for the query he needs to thereby display the explanatory message or the explanatory diagram associated therewith. Thus, a data input system can be provided in which data input can be carried out depending upon the skillfulness.

According to the third aspect of the invention, while displaying an explanatory message or the explanatory diagram by the manipulation of the help key, data input can be taken place on the screen on which the explanatory message or the explanatory diagram is displayed. Therefore, it is convenient for the less skilled programmer in that data input can be carried out while referring to the explanatory message or the explanatory diagram displayed on the screen and error of the data input can be eliminated.

## Claims

1. A data input system for inputting data while referring to a display screen to produce a machining program, comprising:
a screen having a plurality of queries; and
a help key for causing to selectively display said screen and an explanatory screen displaying an explanatory message or an explanatory diagram responsive to each of said plurality of queries.

2. A data input system according to claim 1, wherein said help key is a soft key.

3. A data input system according to claim 1, wherein said help key is a hard key.

4. A data input system for inputting data while referring to a display screen to produce a machining program, comprising:
a screen having a plurality of queries; and

a help key for causing to display an explanatory message or an explanatory diagram corresponding to each of said plurality of queries.

5. A data input system for inputting data while referring to a display screen to produce a machining program, comprising:

a screen having a plurality of queries;

a help key for causing to display an explanatory message or an explanatory diagram corresponding to each of said plurality of queries; and

an input means capable of inputting said data to a screen on which said explanatory message or said explanatory diagram is displayed.

8 CURSOR

MATERIAL NO. = □
2

DRAWING FORMAT = □
3

MATERIAL CONFI -GURATION = □
4

1 QUERY SCREEN

| END | | HELP | | NEXT PAGE |

5

6

7

## Fig. 1

MATERIAL NO. SCREEN 10

| NO. | MATERIAL NAME |
|-----|---------------|
| 1. | S45C |
| 2. | SCM |
| 3. | FC |
| 4. | AL |
| 5. | MAT5 |
| 6. | MAT6 |

MATERIAL NO. = □ 11

| END | | NEXT PAGE |

ANSWER COLUMN

## Fig. 2

Fig. 3

Fig. 4

Fig. 5

42    43    44

ROM    RAM    DISPLAY
UNIT

41    47

PROCE
-SSOR    MACHINE
TOOL

45    46

NONVOLATILE
MEMORY    CONTROL
PANEL

Fig. 6

# INTERNATIONAL SEARCH REPORT

International Application No  PCT/JP88/00730

## I. CLASSIFICATION OF SUBJECT MATTER (if several classification symbols apply, indicate all) [6]

According to International Patent Classification (IPC) or to both National Classification and IPC

$$\text{Int.Cl}^4 \quad \text{G05B19/403, 19/405}$$

## II. FIELDS SEARCHED

### Minimum Documentation Searched [7]

| Classification System | Classification Symbols |
|---|---|
| IPC | G05B19/403, 19/405 |

### Documentation Searched other than Minimum Documentation to the Extent that such Documents are included in the Fields Searched [8]

| | |
|---|---|
| Jitsuyo Shinan Koho | 1971 – 1988 |
| Kokai Jitsuyo Shinan Koho | 1971 – 1988 |

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| Y | JP, A, 60-117301 (Fanuc Ltd.) 24 June 1985 (24. 06. 85) Page 5, upper right column, line 6 to page 6, lower left column, line 13 (Family: none) | 1-5 |
| Y | JP, A, 59-180603 (Fanuc Ltd.) 13 October 1984 (13. 10. 84) Page 2, upper right column, line 2 to lower left column, line 18 & WO, A, 8403960 & EP, A, 148948 | 1-5 |
| Y | JP, A, 61-183709 (Yamazaki Tekkosho Kabushiki Kaisha) 16 August 1986 (16. 08. 86) Page 2, lower left column, lines 8 to 15 (Family: none) | 2, 3 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| October 13, 1988 (13. 10. 88) | October 24, 1988 (24. 10. 88) |

| International Searching Authority | Signature of Authorized Officer |
|---|---|
| Japanese Patent Office | |

Form PCT/ISA/210 (second sheet) (January 1985)